# EUROPEAN PATENT APPLICATION

(11) **EP 4 785 767 A1**
(43) Date of publication of application: **05.08.2026**
(21) Application number: 25222794.7
(22) Date of filing: 12.12.2025
(51) Int. Cl.: A01B 59/042, A01F 15/08, B60D 1/02

(54) **ALIGNMENT MARKERS FOR TOWING ASSEMBLIES**

(30) Priority: 31.01.2025 US 202519042100
(71) Applicant: Deere & Company, Moline, IL 61265 (US)
(72) Inventor: Shashwat, Thorat, Mannheim (DE); Jones, Austin J., Mannheim (DE)
(74) Representative: Stein, Stefan

(57) **Abstract**

A towing assembly for an agricultural machine, which may include a towed implement and a swivel tongue including a forward end to pivotally connect about a first pivot axis to the agricultural machine and a rear end pivotally connected about a second pivot axis to the towed implement, the swivel tongue having a tongue centerline extending from the first pivot axis to the second pivot axis. The swivel tongue may include a tongue alignment marker marking the tongue centerline. The towed implement may include an implement alignment marker marking an implement centerline, which extends rearward from the second pivot axis co-linear with the tongue centerline when the towed implement is towed directly behind the swivel tongue. At least one of the tongue alignment marker or the implement alignment marker includes a protruding structure extending along the tongue centerline or the implement centerline, respectively.

## Description

A portion of the disclosure of this patent document contains material that is subject to copyright protection. The copyright owner has no objection to the reproduction of the patent document or the patent disclosure, as it appears in the U.S. Patent and Trademark Office patent file or records, but otherwise reserves all copyright rights whatsoever.

### FIELD OF DISCLOSURE

The present disclosure relates generally to work machines, such as agricultural, construction, and forestry machines, and more particularly to systems and methods of aligning towed implements using visual alignment markers.

### BACKGROUND

Towing assemblies may include towed implements-such as round and square balers, mowers, raking equipment, tedding equipment, and other agriculture devices-and the connection hardware-such as a swivel tongue-designed to connect those towed implements to a work machine such as a tractor. Towed implements may, for example, include the mechanism for accomplishing the desired work and a set of wheels for traversing the ground behind the work vehicle. Towing assemblies may also be towed implements for other types of work machines including construction, road paving, and other related fields.

A round baler, for example, is towed behind a tractor to pick up windrowed hay from the field using a pickup mechanism. The hay is then fed into a baling chamber where it is rolled into a cylindrical shape. Once the desired bale size is achieved, the baler wraps the bale with twine or netting to maintain its shape and integrity. The completed bale is then ejected from the baler, ready for transport and storage.

The swivel tongue and other connectors may include hitch points on either end to connect to the tractor and the towed implement. These connectors may further be designed to house or support a Power Take Off (PTO) and/or associated mechanisms that transmit power from the tractor to the towed implement. In the example of a baler, the swivel tongue may be a hollow frame connecting to the hitch of the tractor and to a hitch point of the baler. The PTO shaft and associated hardware may then be connected and supported to the swivel tongue to facilitate the PTO's connection between the tractor engine and the baler hardware to power the baler.

For many towed implements, such as round balers, it is important for the towed implement to be aligned with the work machine to effectively and efficiently perform the designated work. Proper alignment further can reduce wear and the risk of damage to the towed implement. In the instance of a round baler, it is advantageous to accurately align the round baler to efficiently gather hay organized in windrows and to pass around or through obstacles such as gate openings.

Many work machines can control the alignment of the tractor using various sensors and electronic controls. However, it is often desirable for these electronic controls to be calibrated to provide accurate control and periodically checked to ensure the calibration continues to be accurate. Even when the system is fully calibrated, some situations demand precise alignment of the towed implement. In those situations, operators will often visually verify the electronic alignment.

What is needed, then, is an alignment system to aid the visual alignment performed by the operator. Such a system improves calibration time, efficiency, and accuracy as well as visual verification in situations demanding precise alignment between the towed implement and the work machine.

### BRIEF SUMMARY

The current disclosure provides an enhancement to conventional systems for towing assemblies for towing by an agricultural machine, which, in some aspects, includes a towed implement; a swivel tongue including a forward end configured to be pivotally connected about a first pivot axis to the agricultural machine and a rear end pivotally connected about a second pivot axis to the towed implement, the swivel tongue having a tongue centerline extending from the first pivot axis to the second pivot axis; a tongue alignment marker located on the swivel tongue and extending parallel to the tongue centerline, preferably on the tongue centerline; and an implement alignment marker located on the towed implement and extending parallel to an implement centerline, preferably on the tongue centerline, the implement centerline extending rearward from the second pivot axis co-linear with the tongue centerline when the towed implement is towed directly behind the swivel tongue; wherein at least one of the tongue alignment marker or the implement alignment marker includes a protruding structure extending parallel to the tongue centerline or the implement centerline, respectively. The implement alignment marker is co-linear with the tongue alignment marker when the towed implement is towed directly behind the swivel tongue.

In some aspects, the swivel tongue alignment marker includes a raised fin extending along the tongue centerline. In further aspects, the swivel tongue includes a tongue surface. The tongue alignment marker may further be raised at least 1.0 inches from the tongue surface. In further aspects, the tongue alignment marker may be located closer to the second pivot axis than the first pivot axis. In still further aspects, the tongue alignment marker may be chrome plated.

In some aspects, the towed implement further includes an implement connection configured to connect to the swivel tongue at the second pivot axis and an implement shield configured to cover the implement connection; wherein the implement alignment marker may be located on the implement shield and includes a protrusion extending toward the swivel tongue. In further aspects, the towed implement further includes at least two wheels that define a direction of travel; wherein the implement centerline may be further defined to extend from the second pivot axis parallel to the direction of travel.

In some aspects, the implement alignment marker extends at least 1.0 inches from the implement shield. In further aspects, the implement alignment marker may be located directly above the second pivot axis.

In some aspects, the swivel tongue may be elongated along the tongue centerline and further includes a hollow frame; and a tongue shield covering a portion of the frame; wherein the tongue alignment marker extends vertically from the tongue shield.

In some aspects, the structures described herein relate to a towing assembly for towing by a tractor, including a round baler including a round baler connection and a round baler shield configured to cover the round baler connection; a swivel tongue including a forward end configured to be pivotally connected about a first pivot axis to the tractor and a rear end pivotally connected about a second pivot axis to the round baler connection, the swivel tongue having a tongue surface and having a tongue centerline extending from the first pivot axis to the second pivot axis; a tongue alignment marker located on the swivel tongue and marking the tongue centerline; a round baler alignment marker located on the round baler and marking a round baler centerline, the round baler centerline extending rearward from the second pivot axis co-linear with the tongue centerline when the round baler is towed directly behind the swivel tongue; and wherein the tongue alignment marker includes a raised fin raised from the tongue surface and extending along the tongue centerline; wherein the round baler alignment marker may be located on the round baler shield and includes a protrusion extending toward the swivel tongue.

### BRIEF DESCRIPTION OF THE SEVERAL VIEWS OF THE DRAWINGS

Fig. 1 is a side view representing an exemplary work machine and towing assembly according to the present disclosure.
Fig. 2 is a front view representing an exemplary towed implement according to the present disclosure.
Fig. 3 is a plan view representing an exemplary swivel tongue according to the present disclosure.
Fig. 4 is a plan view representing an exemplary towing assembly according to the present disclosure.
Fig. 5 is a top view representing an exemplary towing assembly according to the present disclosure.
Fig. 6 is an enlarged side elevation view of one embodiment of an alignment fin on the swivel tongue.
Fig. 7 is an enlarged plan view of one embodiment of an alignment protrusion on the round baler.
Fig. 8 is an enlarged plan view of another embodiment of an alignment protrusion on the round baler.
Fig. 9 is a plan view similar to Fig. 3 showing an alternative embodiment wherein the tongue alignment marker and the implement alignment marker each take the form of raised fins oriented parallel to but laterally offset from their respective tongue and implement centerlines.

### DETAILED DESCRIPTION

Reference will now be made in detail to embodiments of the present disclosure, drawings of which are set forth herein. Each drawing is provided by way of explanation of the present disclosure and is not a limitation. It will be apparent to those skilled in the art that various modifications and variations can be made to the teachings of the present disclosure without departing from the scope of the disclosure. For instance, features illustrated or described as part of one embodiment can be used with another embodiment to yield a still further embodiment.

Thus, it is intended that the present disclosure covers such modifications and variations as come within the scope of the appended claims and their equivalents. Other objects, features, and aspects of the present disclosure are disclosed in, or are obvious from, the following detailed description. It is to be understood by one of ordinary skill in the art that the present discussion is a description of exemplary embodiments only and is not intended as limiting the broader aspects of the present disclosure.

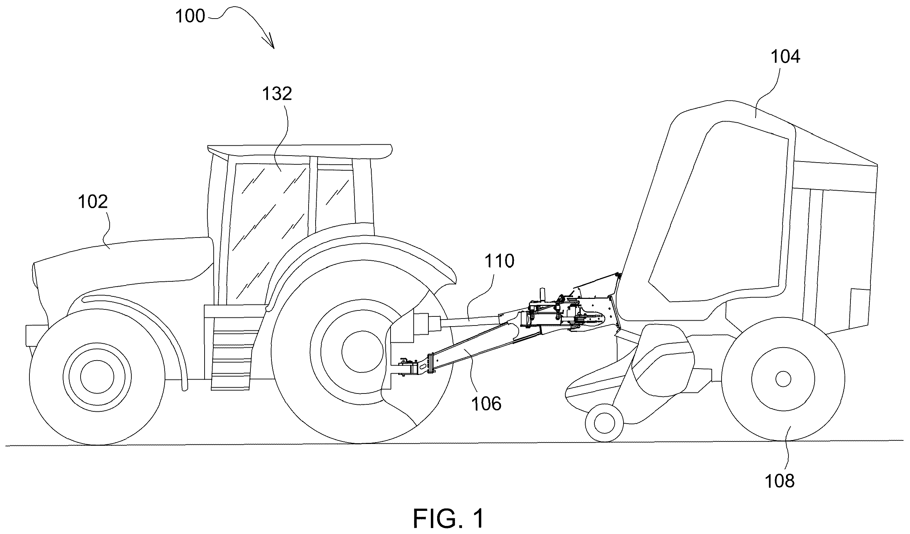

Referring to Figs. 1-5, various embodiments may now be described of a towing assembly 100 for towing by an agricultural machine such as the tractor 102. The towing assembly 100 may include a towed implement such as round baler 104 coupled to any connection equipment such as swivel tongue 106, which is in turn coupled to the tractor 102. The towed implement may further be a square baler, mower, raking equipment, tedding equipment, and other agriculture or heavy industry devices.

As shown in Fig. 1, the round baler 104 is a towed implement for collecting cut hay, gathered in windrows, and creating hay bales. Round balers typically also wrap the hay in twine. The round baler 104 includes a set of wheels 108 (typically two to four wheels) to allow the round baler 104 to traverse the ground behind the tractor 102. Round balers frequently follow a curved path to follow the path of the windrow, which is not always straight, or to distribute the amount of hay across the width of the hay bale. The set of wheels 108 accordingly are further operable to move the round baler 104 side-to-side when desired. To power the various functions discussed, the round baler 104 is frequently connected to the tractor's engine (not shown) through a Power Take Off (PTO) 110. Similarly, many other towed implements may also connect to and be powered by the PTO 110 from the tractor 102.

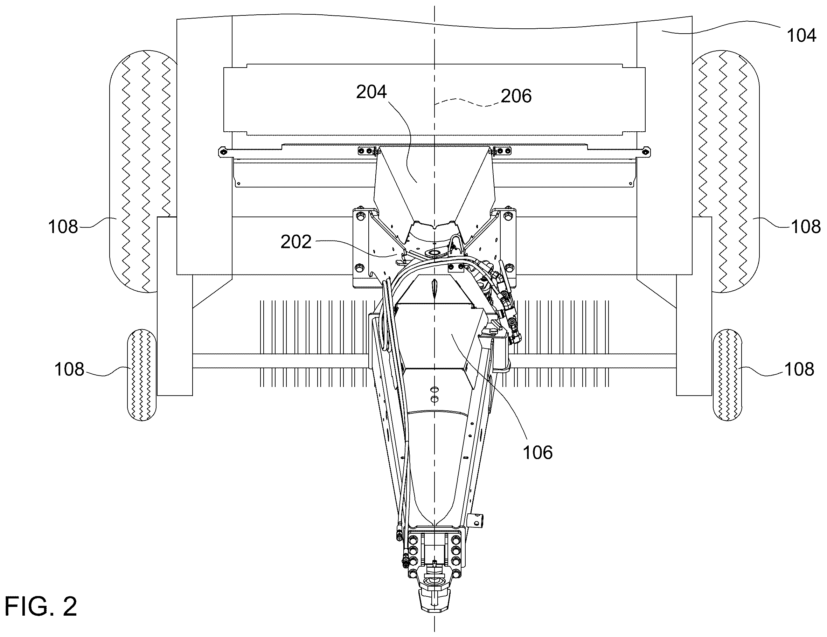

As shown in Fig. 2, the round baler 104 also includes a round baler connection 202 for connecting the round baler 104 to the tractor 102 through the swivel tongue 106. The round baler 104 may further include a round baler shield 204 configured to cover the round baler connection 202 and the connection with the PTO 110.

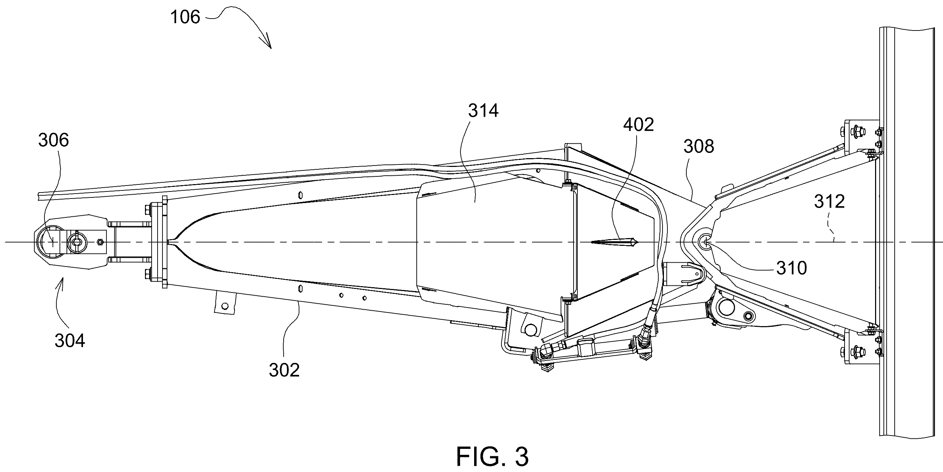

As shown in Fig. 3, the swivel tongue 106 connects the round baler 104 to the tractor 102 and provides support for the PTO 110. The swivel tongue 106 may be formed from a frame 302 that includes a forward end 304 configured to be pivotally connected about a first pivot axis 306 to the tractor 102 and a rear end 308 pivotally connected about a second pivot axis 310 to the round baler connection 202 at the round baler connection 202. The frame 302 of the swivel tongue 106 may be solid, hollow, or any other structure known to a person of skill in the art. The frame 302 may further be elongated along the tongue centerline 312 as a rectangle, a kite, a diamond, or any other shape. For example, the swivel tongue 106 shown in Figs. 1 and 3 forms a modified kite shape. The tongue centerline 312 of the swivel tongue 106 extends from the first pivot axis 306 to the second pivot axis 310. The round baler 104 may also further include a round baler centerline 206 (shown in Fig. 2) extending rearward from the second pivot axis 310 co-linear with the tongue centerline 312 when the round baler is towed directly behind the swivel tongue. This round baler centerline 206 is further typically substantially parallel to the direction of travel. The swivel tongue 106 in some embodiments may further include a tongue surface 314, which in some instances may serve to cover and protect various components of the round baler connection 202, PTO 110, or other mechanical and electrical components associated with the swivel tongue 106.

Both pivotal connections of the swivel tongue 106 may pivot freely. Alternatively, in some embodiments, one or both pivotal connections may be controlled, such as through electronics or hydraulics, to control the orientation of the round baler 104 relative to the tractor 102. This may be used, for example, to operate the round baler 104 such that the round baler 104 travels parallel to the direction of travel but offset from the center of the tractor 102 or to change the offset of the round baler 104 relative to the tractor 102 during operation. In a still further alternative arrangement, the control mechanisms for controlling the pivotal connections may be arranged on the tractor 102 or the round baler 104.

To provide further functionality for controlling the pivoting of the round baler 104 relative to the tractor 102, the tractor 102, round baler 104, and swivel tongue 106 may be equipped in some embodiments with sensors that may be used to detect the orientation of the tractor 102, round baler 104, swivel tongue 106, or any combination thereof relative to each other or the direction of travel.

In embodiments utilizing these sensors and the control mechanisms to automatically control the orientation of the round baler 104 relative to the tractor 102, operators frequently calibrate the sensors, sometimes before each use of the towing assembly 100. Such calibration is frequently performed visually by the operator from the operator stand. Operators may further use visual alignment of the towing assembly 100 to verify that the automatic control of the towing assembly 100 is still within calibration. Visual verification may further ensure additional accuracy of the orientation of the towing assembly 100 in situations where additional accuracy may be desired, such as when passing through a small opening in a gate to ensure the round baler 104 does not collide with another structure (e.g., a fence post) and damage the structure or the round baler 104.

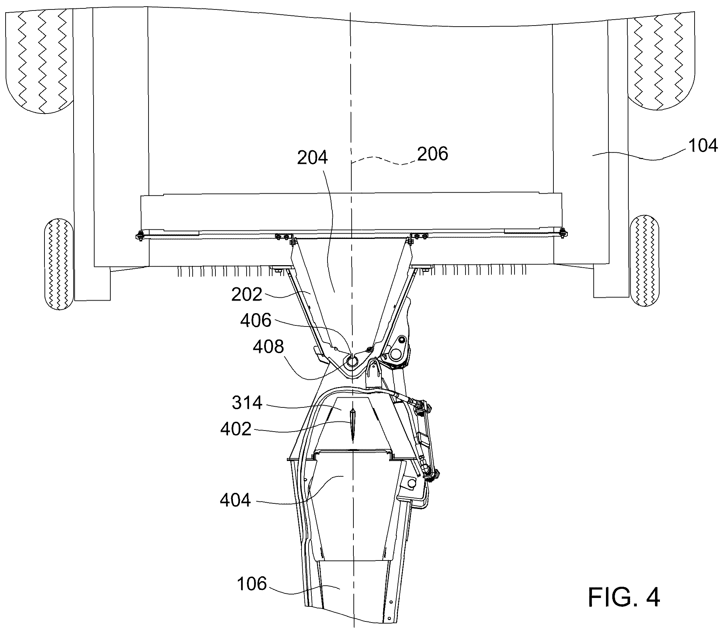

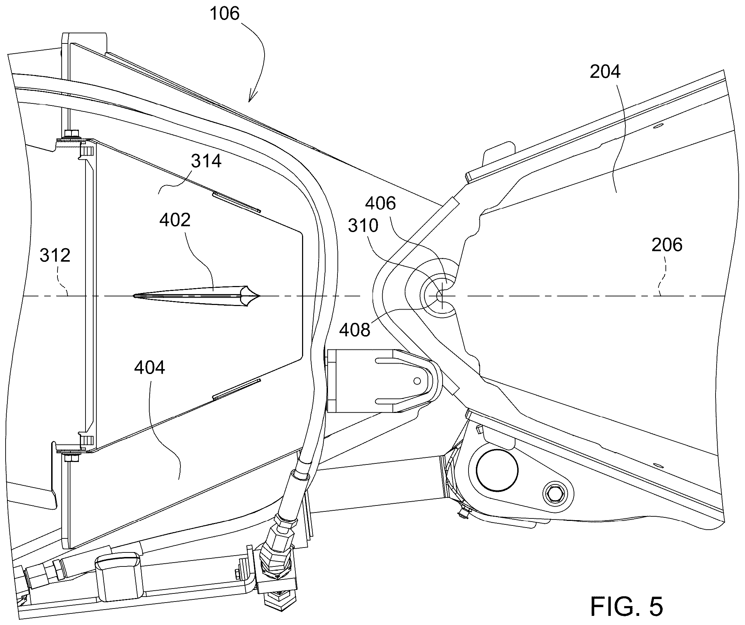

To facilitate visual alignment of the towing assembly 100, Figs. 4 and 5 show an embodiment of an alignment marker system to indicate when the towing assembly 100 is aligned. Fig. 4 shows a portion of the view of towing assembly 100 as viewed from the cab 132 of the tractor 102. Fig. 5 shows the towing assembly 100 from a top view.

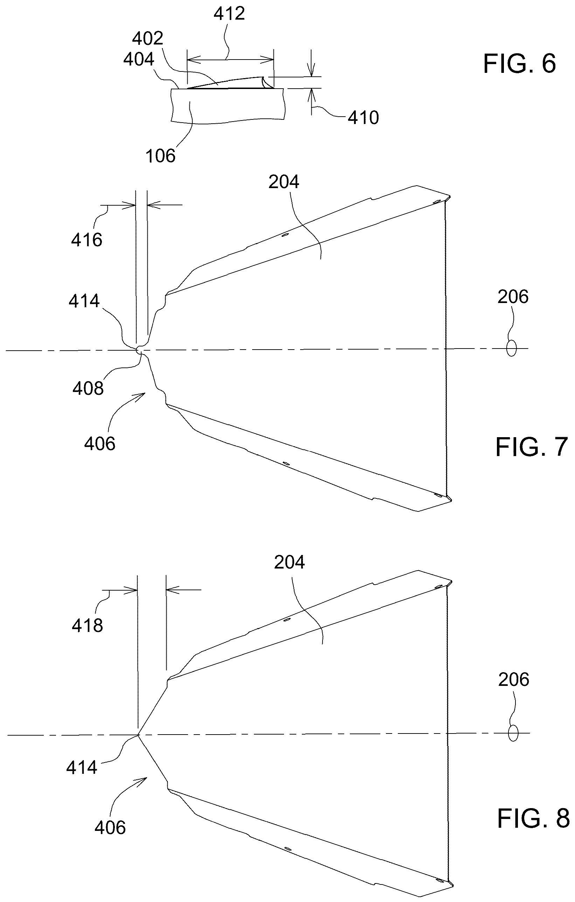

The alignment marker system of the present embodiment includes a tongue alignment marker 402 located on the swivel tongue 106, which marks the tongue centerline 312. An enlarged side elevation view of one embodiment of the tongue alignment marker 402 is shown in Fig. 6. As shown in Figs. 4-6, the tongue alignment marker 402 may be located on the PTO shield 404, which forms a surface on the swivel tongue 106. The PTO shield 404 further serves to protect the mechanisms of the PTO 110 transmitting power to the round baler 104. As shown in Figs. 4 and 5 the tongue alignment marker 402 may be located closer to the rear end 308 and second pivot axis 310 of the swivel tongue 106 than the forward end 304 and first pivot axis 306.

As best shown in Fig. 6, the tongue alignment marker 402 of the present embodiment may be in the form of a protruding, vertically raised fin extending along the tongue centerline 312. The raised fin may, for example, have a fin height 410 and a fin length 412. In one embodiment the fin height 410 may be at least 1.0 inches, preferably at least 2.0 inches, and more preferably at least 3.0 inches. In one embodiment the fin length 412 may be at least 2.0 inches, preferably at least 4.0 inches, and more preferably at least 6.0 inches. In one embodiment the fin height 410 may be about 3 inches and the fin length 412 may be about 6 inches. Other embodiments of the tongue alignment marker 402 may use other structures to create the tongue alignment marker 402, such as a raised protrusion, a raised arrow, a painted indicator, an indicator sticker adhered to the swivel tongue 106, or any other form of marker. Some embodiments may use an alternate paint or plating of the tongue alignment marker 402 to visually distinguish the tongue alignment marker 402 from other structures of the towing assembly 100. For example, the tongue alignment marker 402 may be chrome plated to create a chrome finish.

As best shown in Figs. 7 and 8, the alignment marker system further includes a round baler alignment marker 406 located on the round baler 104 and marking a round baler centerline 206 located on the round baler shield 204. The round baler alignment marker 406 may include a protrusion 408 extending toward the swivel tongue 106. The protrusion 408 may extend from the round baler shield 204 toward the swivel tongue 106. The protrusion 408 and round baler shield 204 may further be configured such that a distal tip portion 414 of the round baler alignment marker 406 is located directly above the second pivot axis 310.

In the embodiment of Fig. 7 the round baler alignment marker 406 is configured as a planar finger like protrusion lying in the plane of the round baler shield 204 and formed as an integral part of the sheet metal which forms the round baler shield. The finger like protrusion 408 may protrude generally horizontally by a distance 416 from the larger portion of the round baler shield 204. In one embodiment the distance 416 may be at least 0.5 inch, preferably at least 1.0 inches, and more preferably at least 1.5 inches.

In another embodiment as shown in Fig. 8, the round baler alignment marker 406 is configured as a generally V-shaped portion of the front end of the round baler shield 204, with the distal end 414 of the V pointing forward along the round baler centerline 206. The V-shaped portion 406 may protrude forward from the remainder of the round baler shield 204 by a distance 418. In one embodiment the distance 418 may be at least 4.0 inches, preferably at least 5.0 inches, and more preferably at least 6.0 inches.

In all of the embodiments illustrated in Figs. 6-8, each of the swivel tongue alignment markers 402 and the round baler alignment markers 406 may be generally described as a protruding structure extending along the swivel tongue centerline 312 or the round baler centerline 206, respectively. In the case of the swivel tongue alignment marker 402 shown in Fig. 6 the swivel tongue alignment marker 402 protrudes both vertically upward and horizontally from front to rear. In the case of the round baler alignment markers 406 of Figs. 7 and 8 the round baler alignment markers 406 protrude forwardly.

In another embodiment the general arrangement of the swivel tongue alignment marker and the round baler alignment marker could be reversed, so that the round baler alignment marker is in the form of a generally vertical fin similar to that shown in Fig. 6, and so that the swivel tongue alignment marker is in the form of a generally horizontal pointer like one of those of Figs. 7 or 8, except with the pointer directed rearwards instead of forwards.

In yet another embodiment, both the swivel tongue alignment marker and the round baler alignment marker could be in the form of a generally vertical fin similar to that shown in Fig. 6.

By forming the swivel tongue alignment marker and the round baler alignment marker as prominent physical protrusions, whether vertically protruding or horizontally protruding, from the established features of the swivel tongue and the round baler, an alignment marker system is provided which is easily visualized by the operator in the cabin 132, and which remains visible even in the environment of an operating baler which tends to become covered with dirt and debris from the baling operation.

The alignment marker system including the swivel tongue alignment marker 402 and the round baler alignment marker 406 may be described as a gunsight alignment system which helps to form an imaginary line for visual detection of the angle between the swivel tongue centerline 312 and the round baler centerline 206.

In other embodiments, the round baler alignment marker 406 may alternatively include other structures including a fin, raised arrow, raised protrusion, a painted indicator, an indicator sticker adhered to the round baler shield 204, or any other form of marker. In still other embodiments, the tongue alignment marker 402, the round baler alignment marker 406, or both may include multiple alignment markers. Such a configuration may, for example, indicate a range of acceptable variation for the alignment of the towing assembly 100. These additional alignment markers may alternatively allow an operator to configure the tractor 102 and towing assembly 100 in alternative alignment relationships. For example, one set of alignment markers may designate when the towing assembly 100 is directly behind and parallel to the tractor 102, and another set of alignment markers may indicate when the towing assembly 100 is offset to the side of the tractor 102 and also parallel to the tractor 102 in the direction of travel.

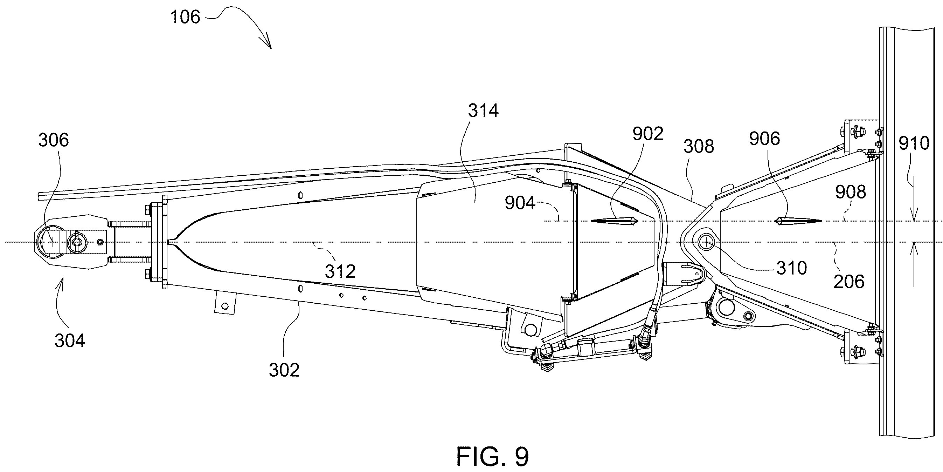

Fig. 9 shows an alternative embodiment in which a tongue alignment marker 902 is in the form of a raised fin extending along a line 904 parallel to the tongue centerline 312, and an implement alignment marker 906 is in the form of a raised fin extending along a line 908 parallel to the implement centerline 206. The tongue alignment marker 902 and the implement alignment marker 906 may each be structurally similar to the tongue alignment marker 402 previously described. The tongue alignment marker 902 and the implement alignment marker 906 may each be laterally offset from the tongue and implement centerlines 312 and 206, respectively, by an offset distance 910. The tongue alignment marker 902 and the implement alignment marker 906 are arranged such that the implement alignment marker 906 is co-linear with the tongue alignment marker 902 when the towed implement is towed directly behind the swivel tongue. The tongue alignment marker 902 may be any distance 910 from tongue centerline 312, including zero in which case the line 904 is co-linear with tongue centerline 312. The implement alignment marker 906 may be any distance 910 from the implement centerline 206, including zero in which case the line 908 is co-linear with the implement centerline 206.

Thus, although there have been described herein particular embodiments of the towing assemblies and work machines, it is not intended that such references be construed as limitations upon the scope of this disclosure except as set forth in the following claims.

## Claims

1. A towing assembly (100) for towing by an agricultural machine (102), the towing
assembly (100) comprising:
a towed implement (104);
a swivel tongue (106) including a forward end (304) configured to be pivotally connected about a first pivot axis (306) to the agricultural machine (102) and a rear end (308) pivotally connected about a second pivot axis (310) to the towed implement (104), the swivel tongue (106) having a tongue centerline (312) extending from the first pivot axis (306) to the second pivot axis (310);
a tongue alignment marker (402, 902) located on the swivel tongue (106) and extending parallel to the tongue centerline (312); and
an implement alignment marker (406, 906) located on the towed implement (104) and extending parallel to an implement centerline (206), the implement centerline (206) extending rearward from the second pivot axis (310) co-linear with the tongue centerline (312) when the towed implement (104) is towed directly behind the swivel tongue (106);
wherein at least one of the tongue alignment marker (402, 902) or the implement alignment marker (406, 906) includes a protruding structure extending parallel to the tongue centerline (312) or the implement centerline (206), respectively, and the implement alignment marker (406, 906) is co-linear with the tongue alignment marker (402, 902) when the towed implement (104) is towed directly behind the swivel tongue (106).

2. The towing assembly (100) of claim 1, wherein:
the tongue alignment marker (402, 902) includes a raised fin extending parallel to the tongue centerline (312).

3. The towing assembly (100) of claim 1 or 2, wherein:
the swivel tongue (106) includes a tongue surface (314);
wherein the tongue alignment marker (402, 902) is raised at least 1.0 inches from the tongue surface (314).

4. The towing assembly (100) of any of the above claims, wherein:
the towed implement (104) further includes an implement connection (202) configured to connect to the swivel tongue (106) at the second pivot axis (310) and an implement shield (204) configured to cover the implement connection (202);
wherein the implement alignment marker (406, 906) is located on the implement shield (204) and includes a protrusion (408) extending toward the swivel tongue (106).

5. The towing assembly (100) of claim 4, wherein:
the implement alignment marker (406, 906) extends at least 0.5 inches from the implement shield (204).

6. The towing assembly (100) of claim 4 or 5, wherein:
the implement alignment marker (406, 906) marks the implement centerline (206) and is located directly above the second pivot axis (310).

7. The towing assembly (100) of any of the above claims, wherein:
the swivel tongue (106) is elongated along the tongue centerline (312) and further comprises:
a hollow frame (302); and
a tongue shield (404) covering a portion of the frame (302);
wherein the tongue alignment marker (402, 902) extends vertically from the tongue shield (404).

8. The towing assembly (100) of any of the above claims, wherein:
the tongue alignment marker (402, 902) is located closer to the second pivot axis (310) than the first pivot axis (306).

9. The towing assembly (100) of any of the above claims, wherein:
the tongue alignment marker (402, 902) extends along the tongue centerline (312).

10. The towing assembly (100) of any of the above claims, wherein:
the towed implement (104) further comprises at least two wheels (108) that define a direction of travel;
wherein the implement centerline (206) is further defined to extend from the second pivot axis (310) parallel to the direction of travel.
